# EUROPEAN PATENT APPLICATION

(11) **EP 1 396 786 A1**
(43) Date of publication of application: **10.03.2004**
(21) Application number: 02256109.6
(22) Date of filing: 03.09.2002
(51) Int. Cl.: G06F 5/06

(54) **Bridge circuit for use in retiming in a semiconductor integrated circuit**

(71) Applicant: STMicroelectronics Limited, Almondsbury, Bristol BS32 4SQ (GB)
(72) Inventor: Elliott, Paul, Bristol BS7 8QS (GB)
(74) Representative: Loveless, Ian Mark

(57) **Abstract**

A bridge circuit includes two FIFO circuits (60,62) each having an associated FIFO control circuit (68,70). In each FIFO control circuit, a write pointer register (92) and a read pointer register (94) for controlling the storage location for writing to and reading from the FIFO circuit are each controlled by control logic (100,102). The control logic is responsive to comparators (104,106) which receive and compare the write pointer value and the retimed read pointer value to control the write pointer register, and receive and compare the read pointer value and the retimed write pointer value to control the read pointer register. The retiming circuits (108,110) are configurable in response to a mode signal to provide different degrees of retiming. The maximum number of storage locations (78) that can be full at any one time is a fixed limit.

## Description

### BACKGROUND OF THE INVENTION

This invention relates to a bridge circuit for use in retiming in a semiconductor integrated circuit.

In the past the use of multiple clock frequencies has been avoided as much as possible as it generates considerable problems in synchronising data and commands when they have to be transferred across the clock boundary. We have appreciated however that there would be many advantages to be obtained from being able to run different parts of a system on a single integrated circuit at different clock rates. Furthermore, we have appreciated that the retiming circuitry necessary at the clock boundary can be used to provide additional advantages in the operation of the integrated circuit.

### SUMMARY OF THE INVENTION

The invention is defined in claim 1 below to which reference may now be made. Advantageous features of the invention are set forth in the appendant claims.

A preferred embodiment of the invention is described in more detail below with reference to the drawings. The preferred embodiment takes the form of a bridge circuit which includes two storage buffers in the form of FIFO storage circuits, each having an associated storage buffer control circuit to control writing to, and reading from the FIFO circuit. In each FIFO control circuit, a write pointer register and a read pointer register control the storage location in the FIFO to which data is written and from which it is read respectively. The write and read pointer registers are each controlled by control logic.

The control logic is responsive to a pair of comparators. A first comparator receives and compares the write pointer value and the read pointer value after retiming, and controls the write pointer register. A second comparator receives and compares the read pointer value and the write pointer value after retiming, and controls the read pointer register. The retiming is done by retiming circuits which are configurable in response to a mode signal to provide different degrees of retiming, for use when the FIFO input and output clocks differ by different amounts.

The maximum number of storage locations in the FIFO circuit that can be full at one time is a choice but is preferably even 4, 8, 10 (generally 2n) and is chosen to be even to simplify Gray codes discussed later. Indeed, both the mode signal and the latency signal can be reconfigured during operation of the bridge circuit.

The use of the FIFO circuit with its reading and writing controlled by comparison of the write and read pointers, with appropriate retiming, enables the bridge circuit to be used to provide a 'hold-off' function set by a latency value, so that data is output in batches rather than as isolated words spaced in time. Where the output is applied to the system bus, this enables greater efficiency in the usage of the bus.

### BRIEF DESCRIPTION OF THE DRAWINGS

The preferred embodiment of the invention will now be described in more detail, by way of example, with reference to the accompanying drawings, in which:
**Figure 1** is a block diagram of an integrated circuit having a CPU, a system bus, and a plurality of peripherals, with which a bridge circuit embodying the invention can be used;
**Figure 2** is a block diagram of a bridge circuit embodying the invention and used in the integrated circuit of Figure 1;
**Figure 3** is a block diagram of a FIFO storage device as used in the bridge circuit of Figure 2;
**Figure 4** illustrates the writing to and reading from the FIFO storage device and the change in the related write pointer and read pointer values;
**Figure 5** is a block diagram of a FIFO control circuit in the bridge circuit of Figure 2;
**Figure 6** is a table illustrating the filling and emptying of the FIFO in response to changes in write and read pointer values;
**Figure 7** is a block diagram of a retiming circuit in the FIFO control circuit of Figure 5; and
**Figure 8** is a block diagram of circuitry in the bridge configuration circuit of Figure 2 for detecting a change in the required operational mode.

### DETAILED DESCRIPTION OF THE PREFERRED EMBODIMENT

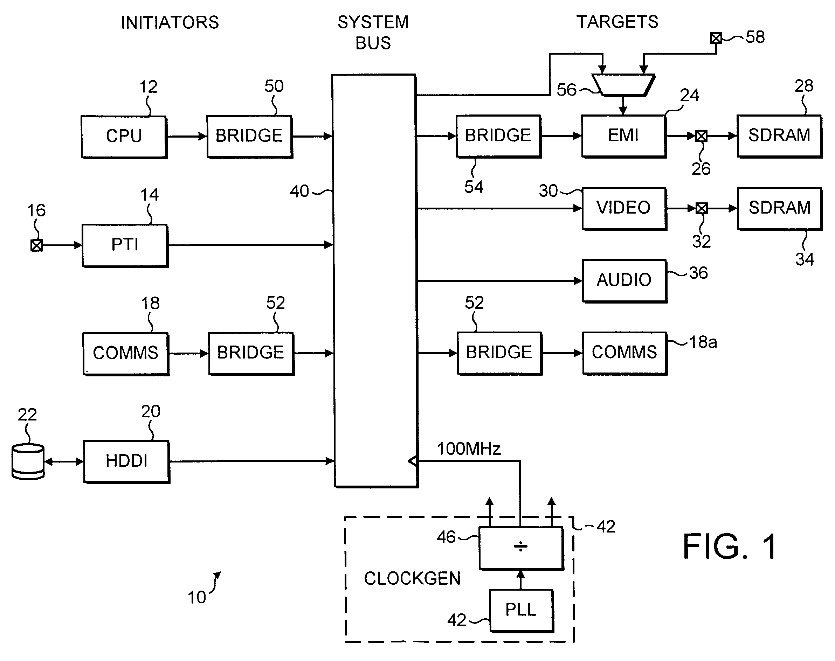

Figure 1 shows in block form a semiconductor integrated circuit or chip in which a bridge embodying the invention can be employed. The integrated circuit 10 is of the 'system on a chip' type and includes a plurality of initiator circuits, a system bus, and a plurality of target circuits. It is possible for some circuits to be both initiators and targets, as discussed below.

The initiators shown on the left-hand side of Figure 1 include a central processing unit or CPU 12, a program transport interface 14 with associated external connection pins 16, and a communications circuit 18 which may include a uART and direct memory access controller for example. Other initiators may be provided including a hard disk drive interface HDDI 20 coupled to a hard disk 22.

The targets shown on the right-hand side of Figure 1 include an external memory interface (EMI) 24 connected through external connection pins 26 to an external memory in the form of an SDRAM 28, a video circuit 30 also connected through external connection pins 32 to an SDRAM 34, and an audio circuit 26. In fact the video RAM 34 may be capable of being used generally as part of the system memory. The communications circuit may also be a target and is thus shown also on the right-hand side of Figure 1 as the communications circuit 18a.

All the initiators and targets are coupled to a system bus 40 for communication between them. In principle any initiator can initiate communication with any target through the bus 40.

The integrated circuit 10 also includes a clock generator circuit 42 which has a phase-locked-loop PLL 44 and a divider chain 46. The bus 40 is clocked at one of the frequencies generated by the clock generator; in this example the bus is clocked at 100 MHz.

With an arrangement as shown in Figure 1 problems arise because the clock speeds used by the various peripherals are not all the same. For example, while the bus 40 is clocked at 100 MHz, for example, the CPU 12 might for example operate at about 166 MHz. Similarly the external memory interface and the communications controller 18,18a may operate at a different speed from the bus 40.

Unless all the circuits on the chip are only to run at the speed of the slowest, a way needs to be found to accommodate the differing clock speeds. Hitherto the use of multiple clock speeds on a single integrated circuit has been avoided.

To allow different circuits to operate at different clock speeds, the integrated circuit of Figure 1 is provided with bridge circuits to accommodate changes between clock speeds. As shown, a bridge circuit 50 is included between the CPU 12 and the bus 40, a bridge circuit 52 is included between the external memory interface 24 and the bus 40, and a bridge circuit 54 is included between the communications circuit 18,18a and the bus 40.

Some circuits may be adapted to run at an externally-received clock rate as well. This is illustrated in Figure 1 by the EMI 24, which is clocked through a selector 56. The selector 56 receives and selects between internal clock pulses and clock pulses received at an external connection pin 58.

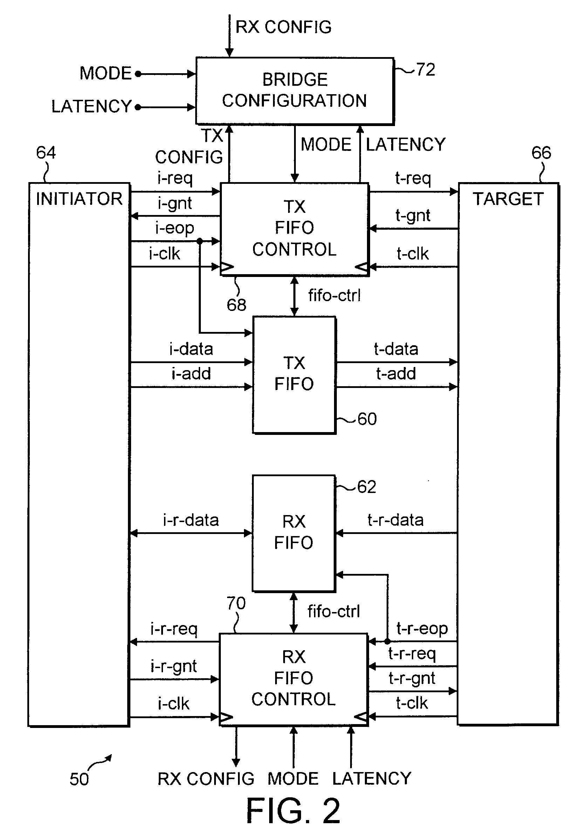

Figure 2 illustrates the structure of one of the bridge circuits, namely the bridge circuit 50. All the bridge circuits 50, 52 and 54 are essentially identical.

The bridge circuit 50 is built round two storage buffers here shown as FIFO (first in, first out) storage circuits 60,62, the detailed construction of which is described in more detail below. A first FIFO circuit 60 is the transmit FIFO and is used for traffic from the initiator 64 to the target 66. In the case of the bridge circuit 50, the initiator 64 is the CPU 12, and the target 66 is effectively the system bus 40 so far as the bridge circuit is concerned. The second FIFO circuit 62 is the receive FIFO and is used for responses from the target 66 to the requests from the initiator 64. Two storage buffer control circuits are provided. A transmitter FIFO control circuit 68 controls the transmit FIFO 60 and a receive FIFO control circuit 70 controls the receive FIFO 62. A bridge configuration controller 72 is coupled to both the transmit and receive FIFO control circuits 68,70. The latency defines the hold-off interval, that is the time delay before the FIFO makes a request having received a first word. The bridge configuration controller 72 receives a MODE command signal at an input 74 and a LATENCY command signal at an input 76, and provides mode and latency control signals to both the transmit and receive FIFO control circuits 68,70. The bridge configuration controller 72 receives a transmission configuration signal from the transmit FIFO control circuit 68 and a reception configuration signal from the receive FIFO control circuit 70.

The transmit FIFO 68 receives initiator data and address information over lines I-data and I-add from the initiator 64 and supplies the data and address information to the target over lines t-data and t-add. Any response to a request from the initiator is returned by the target to the receive FIFO 70 over a line t-r-data and is transferred by the FIFO 70 to the initiator 64 over a line I-r-data. Other lines to and from the transmit FIFO 60 and receive FIFO 62 carry opcode, priority, source identification and target identification signals as will be understood by those skilled in the art but these are not of importance in relation to the present invention and thus are not described in further detail.

The transmit FIFO control circuit 68 receives an initiator request signal I-req from the initiator 64 and generates at an appropriate time a target request signal t-req. The FIFO control circuit 68 returns an initiator grant signal I-gnt and the target returns a target grant signal t-gnt when appropriate. The initiator provides both to the transmit FIFO control circuit and to the transmit FIFO 60 an end-of-packet signal I-eop. Finally the transmit FIFO control circuit receives both initiator clock pulses I-clk and target clock pulses t-clk.

The transmit FIFO control circuit 68 is coupled to the transmit FIFO 60 by fifo-ctrl lines to control the operation of the transmit FIFO 60 as described below.

The receive FIFO control circuit 70 and the receive FIFO 62 are similarly connected to the initiator and the target for transmission in the opposite direction. From now on the receive function will not be described in detail as it is simply the reverse of the transmit function.

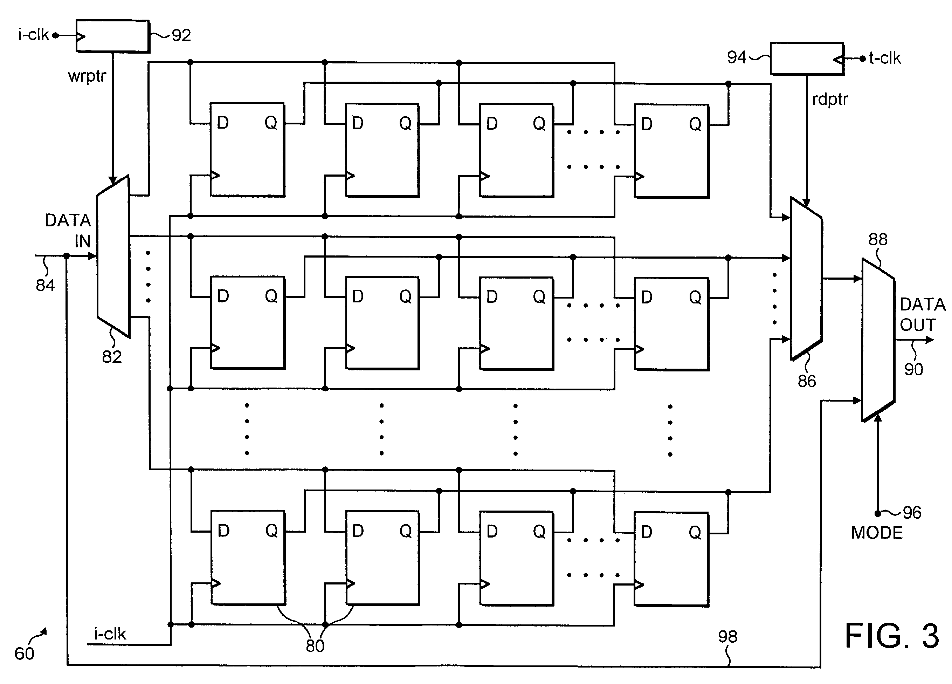

The basic construction of the transmit FIFO 60 is shown in Figure 3. The FIFO consists of a chosen number of rows, preferably 2n, here eight rows or blocks 18 of D-type flip-flops 80, each block or bank containing 77 flip-flops which allows each block to receive one word of data in the system in which the bridge is being used. A distributor switch 82 is connected to a data input 84 and distributes an incoming word to a desired one of the eight blocks in dependence upon a write pointer (wrptr) signal received by the distributor 82. A selector switch 86 selectively connects a desired one of the blocks to an output in dependence upon a read pointer (rdptr) signal received by the selector 86. The output of the selector 86 is applied to one input of a second selector 88, the other input of which is connected directly to the input 84 by a bypass line 98. The selector 88 is controlled by a mode signal, as described below, received at an input 96, so that the FIFO can be bypassed in a synchronous mode where the initiator and target clocks are the same, using the bypass line 98. The output 90 of the selector 88 constitutes the output of the FIFO circuit 60.

Clock pulses are applied to the circuit of Figure 3 as follows. All the D-type flip-flops 80 are clocked by initiator clock pulses I-clk, with each row selected by a multiplexer. The write pointer is also clocked by the initiator clock pulses I-clk, and to that end is received from a counter 92 which is clocked by I-clk. The read pointer however is clocked by the target clock pulses t-clk, and to that end is received from a counter 94 which is clocked by t-clk.

In the receive FIFO circuit 62, the D-type flip-flops and the write pointer are clocked by t-clk, and the read pointer is clocked by I-clk. The receive FIFO also contains less D-type flip-flops in each block, as less signals are buffered in the return path direction.

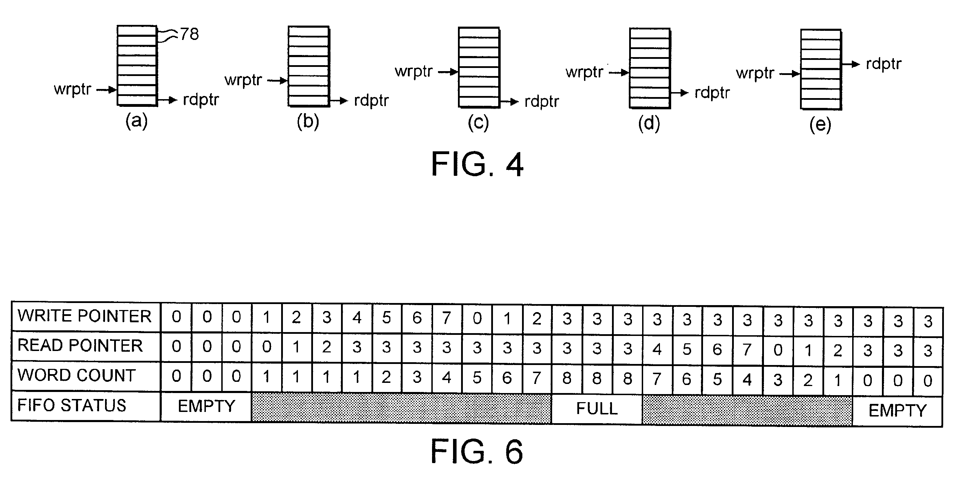

The FIFO circuit 60 as shown in Figure 3 operates as a rotary buffer. This is diagrammatically shown in Figure 4. The write pointer will always point to a different block from the read pointer. Assume that the pointers are initially addressing two blocks as shown at (a) in Figure 4. That is the write pointer is addressing block 1 and the read pointer is addressing block 0. If a new word is received, the write pointer is incremented by one, and the new word is written into block 2. This is shown at (b). If another new word arrives this is written into block 3, and the pointers are as shown at (c). If now a word is read from the FIFO circuit, then the read pointer will be incremented by one.

The circuit has a limit which is defined as the difference in blocks between the write and read pointers, or more accurately the number of blocks by which the write pointer is ahead of the read pointer. If words continue to be written into the FIFO faster than they are withdrawn the position of maximum limit will be reached. An example of this is shown at (e) in Figure 4 where there is a limit of 7. At this point a read must take place before any further data can be received.

When the bridge circuit 50 is used in an arrangement such as shown in Figure 1, the circuit can be used to form words into batches of up to eight words before they are sent onto the bus, thus increasing the efficiency of the usage of the bus 40. As will be described below, the FIFO of the preferred embodiment is configurable as desired to optimise the flow of traffic from the peripheral circuits over the bus. The data is buffered in both directions by having the transmit FIFO 60 and the receive FIFO 62. While described as having eight blocks 78 in each buffer, the size, or depth, of the FIFO can be chosen to be different from one application to another. The width can also be changed to accommodate different word sizes.

The operation of the bridge circuit illustrated in Figure 2 will now be described.

Initially the initiator 64 will make a request by asserting I-req, that is giving it value 1 instead of value 0. If the transmit FIFO 60 is ready to receive data, the transmit FIFO control circuit 68 will send an I-gnt signal to the initiator. If the transmit FIFO is full or otherwise unable to accept data the I-gnt signal will not be generated. The data word from the initiator is then clocked into the transmit FIFO 60, using the rising edge of the I-clk pulses.

After a predetermined time delay, the t-req signal to the target is asserted. This is when the contents of the FIFO, that is the FIFO depth, reaches the programmed or preset limit. Alternatively, the time delay could be a predetermined number of clock cycles of either buffer input or output clock. If the target is able to receive data it returns a t-gnt signal. With both t-req and t-gnt equal to 1, data is now clocked out of the transmit FIFO. A t-req will also be generated if an end of packet signal is received, that is I-eop = 1, indicating that this word is the last in a packet. Once the t-req signal is asserted, whether because the limit is reached or because an end of packet indicator is received, it is de-asserted or returned to zero only when the transmit FIFO becomes empty, all data having been clocked out of it.

Thus the transmit FIFO 60 is allowed to fill up, and when it is full, all the data in it is transmitted onto the bus. The transmit FIFO thus provides a hold-off function which promotes improved bus efficiency. This is particularly useful with direct memory accesses for example.

It will be appreciated that the receive FIFO 62 operates similarly. The receive FIFO control circuit 70 controls the flow of return data from the target interface to the receive FIFO through to the initiator interface. When t-r-req = 1 and t-r-gnt = 1, return data is clocked into the receive FIFO 62 on the rising edge of t-clk. The t-r-gnt signal is asserted so long as the receive FIFO 62 is not full. When the receive FIFO receives its programmed latency, which may be the same as or different from the programmed latency of the transmit FIFO, then the signal I-r-req is asserted to initiate transfer back to the initiator. The I-r-req signal is also asserted on receipt of the last word in a packet from the target. Data is clocked out of the receive FIFO while I-r-req and I-r-gnt are both at logic 1.

Once the signal I-r-req is asserted it is pulled to logic 0 only when the depth of the receive FIFO is zero, that is when it is empty.

Both the latency of the transmit FIFO and the latency of the receive FIFO are configurable, so that t-req or I-r-req can be programmed to become asserted where there are one, two, three or up to 2n, preferably eight words loaded into the transmit FIFO or receive FIFO respectively. The latency configuration is described in more detail below. The degree of hold-off provided is thus variable from zero up to a maximum value determined by the size of the FIFOs.

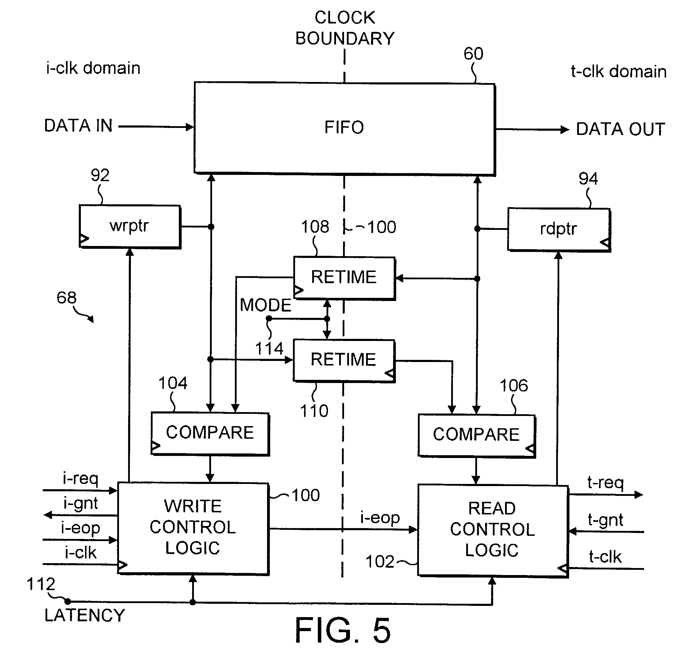

The transmit FIFO control circuit 68 will now be described in more detail with reference to Figure 5 of the drawings. Figure 5 shows the transmit FIFO 60 the construction of which is shown in Figure 3 together with the write pointer counter or register 92 and the read pointer counter or register 94. Figure 5 also shows at 100 the clock boundary between the I-clk domain on the left of the figure and the t-clk domain on the right of the figure. The clock inputs to the circuits are not shown for reasons of clarity.

The write pointer held in counter 92 is controlled by write control logic 100 and the read pointer held in counter 94 is controlled by read control logic 102. Each control logic block may take the form of a state machine and receives the output of a respective comparator, which in turn receives the values of both the write and read pointers. However, the two control logic blocks and comparators are in different clock domains. Thus a comparator 104 clocked by I-clk receives the write pointer value directly from the counter 92 and receives the read pointer from the counter 94 after retiming in a first retiming circuit 108. The output of the comparator 104 is applied to the write control logic 100. A comparator 106 clocked by t-clk receives the read pointer value directly from the counter 94 and receives the write pointer from the counter 92 after retiming in a second retiming circuit 110. The output of the comparator 106 is applied to the read control logic 102.

The comparators compare the values of the write and read pointers and from this comparison they can determine whether the FIFO is full, empty, almost full (where just one word can be written into the FIFO), and almost empty (when just one word is left in the FIFO). The write counter 92 is incremented when data is written into the FIFO (provided it is not full) and the read counter 94 is incremented when data is being read from the FIFO (provided it is not empty), as illustrated above with reference to Figure 4. The maximum permitted contents of the FIFO for it to be treated as full, is a set limit.

The control logic blocks also are coupled to the initiator 64 and target 66 interfaces so that the operation is as follows. Provided that the comparison of the write and read pointers made by the comparator 104 shows that the FIFO is not full, when I-req is received the write control logic asserts I-gnt. Data can then be received and written into the FIFO, the write pointer being incremented by the write control logic 100 with each received word. When the comparator 104 determines that the FIFO is full, further writing and incrementing is stopped and I-gnt de-asserted.

When the FIFO becomes full, t-req is asserted. It is also asserted if an end of packet signal has been received. Provided that the comparison of the write and read pointers made by the comparator 106 shows that the FIFO is not empty, t-req remains asserted. Assuming the target is ready to receive the data, t-gnt is received by the read control logic 102, and data is read out of the FIFO. The read pointer is incremented by one with each word read from the FIFO and transmitted to the target. When the comparator 106 determines that the FIFO is empty, further reading and incremented is stopped and t-req de-asserted.

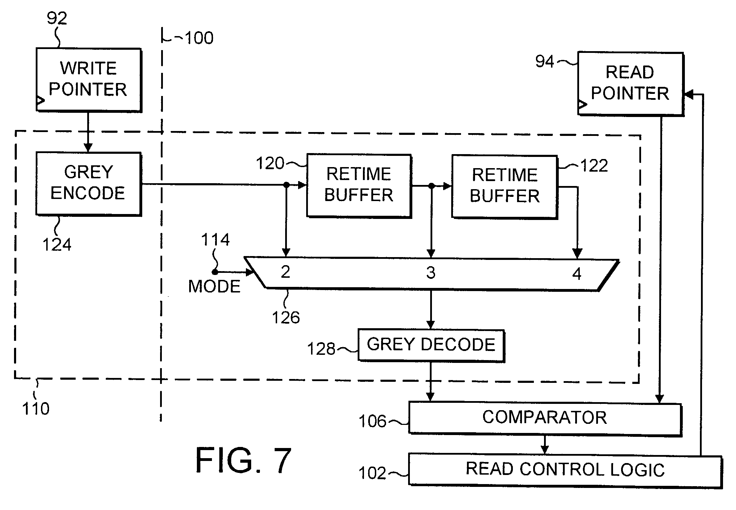

An example of the way in which the FIFO fills up and empties is seen in the table shown in Figure 6, which shows a succession of values for the write pointer and read pointer. The word count in the FIFO is equal to the difference 'between the pointer values modulo size, where size is preferably 2n. The bottom line of the table shows when the FIFO is empty and when it is full.

The corresponding receive FIFO control circuit 70 for the receive FIFO 62 is similarly constructed. Response data is clocked into the receive FIFO 62 so long as t-r-req and t-r-gnt are asserted, using t-clk as the clock. When the FIFO is full, t-r-gnt is de-asserted. For reading, I-r-req is then asserted, and on receipt of I-r-gnt the FIFO contents are read out until the FIFO is determined to be empty. The write pointer is incremented as words are written into the FIFO and the read pointer is incremented as words are read out of the FIFO.

The retiming circuits 108,110 in Figure 5 will be described with reference to Figure 7. They are identical, and it is assumed that the retiming circuit 110 is illustrated. The retiming circuit 108 is identical save that I-clk and t-clk are interchanged. It will be noted from Figure 5 and Figure 6 that the retiming circuits receive a MODE signal at an input 114. This is (or is part of) the same MODE signal that is applied to input 96 in Figure 3.

Before describing the construction of the retiming circuit, it should be noted that the FIFOs can operate in four modes, as determined by the MODE signal. These modes are as follows:
1. **Synchronous mode.** This mode is employed when I-clk and t-clk are actually one and the same, so that the bridge circuit 10 is not required to be active in this mode a signal is applied to input 96 such as to cause selector 88 to select the bypass line 98 direct from input 84. The FIFO circuit is then not use at all.
2. **Semi-synchronous with no retime.** This is used when the initiator and target clocks are related such as simple ratios 1/2, 2/1, 3/2, 3/1, etc. This relationship means that, provided the two clock division trees are balanced with respect to each other, data can be passed between the two clock domains without asynchronous re-time buffers. The two clock trees should be balanced as one, with minimal skew. This assumes simple clock ratios e.g. 1:2, 2:1 and a well balanced internal clock tree.
3. **Semi-synchronous with one re-time flip-flop.** This mode can be used when I-clk and t-clk are phase related but of a different frequency. This will apply when they are generated from the same source but subject to different frequency division. One will be a multiple of the other; these need not necessarily be an integral multiple but may be a ratio of small integers of, say, less than ten. As an example, I-clk may be 120 MHz and t-clk 100 MHz. A single retime stage is employed between the clock domains to improve the static timing from the write or read counter to the end of the comparison operation. This is especially useful to overcome clock skew and short path delay, which can arise when the two clocks are very close in frequency. In the embodiment, this uses an extra D-type flip-flop to compensate for poorly balanced clock trees.
4. **Asynchronous.** The fourth mode is an asynchronous mode which includes two re-time stages in accordance with normal practice to ensure proper retiming by minimizing metastability.

The retiming circuit 110 shown in Figure 7 includes two retiming buffers 120,122 connected in cascade. Each retiming buffer is constituted by a flip-flop circuit. A Gray code generator 93 is clocked synchronously with the write pointer counter 92 to produce a Gray code sequence. As an alternative, the wrptr signal from the write pointer counter 92 is applied first to a Gray encoder in the retiming circuit which encodes the write pointer values using a Gray code. A Gray code sequence is one in which only one bit of a number sequence changes from one number to the rest and is used to award stability problems of changing more than one bit at a time. The output of the Gray encoder (which should be glitch free) is applied across the clock domain boundary 100 to the cascaded retiming buffers 120,122. A selector 126 selects one of three outputs, namely the output of the Gray encoder, the output of the first retiming buffer 120, and the output of the second retiming buffer 122, in dependence upon whether the MODE signal received at input 114 indicates mode 2, mode 3, or mode 4 respectively. The output of the selector 126 is applied to a Gray code decoder 128, the output of which is then applied to the comparator 106. The use of Gray coding also assists in minimizing metastability issues. It is still used when in modes 2 and 3 as the extra delay in the data path minimizes 'shoot-through' risk.

It should be noted that the write pointer counter could itself simply produce Gray codes and these used by the FIFO buffer store to address the storage locations, and this is within the scope of the invention. In such a case, the comparator could be implemented to compare the difference between the Gray codes, or the Gray codes decoded first as shown.

An important feature of the bridge circuit of the preferred embodiment is its capability of being dynamically reconfigured. The mode is checked on each rising edge of a stroble signal, and if a change has taken place, a 'new-data' signal is generated. This new-data signal is applied to those circuits which make use of the MODE and LATENCY signals to cause them to respond to the new mode signal and its associated latency value. In particular a change of mode will cause a change of state of at least one of the selectors or multiplexers 96 (Figure 3) and 126 (Figure 7).

When a mode change is detected, the first step is to flush the transmit and receive FIFOs. The bridge circuit stops accepting any new transactions, but all the pending transactions are completed. The control logic blocks are set to an idle state. The bridge circuit then configures itself in response to the new-data signal to conform with the new mode, by changing the state of the relevant multiplexers, and starts accepting the transactions with the new mode and latency values.

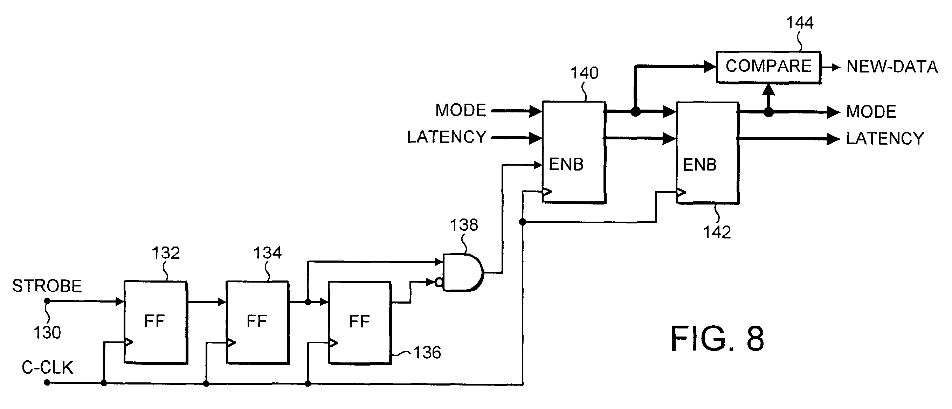

The generation of the new-data signal is illustrated in Figure 8 which shows part of the bridge configuration circuit 72. A strobe signal is received at an input 130 and applied to three flip-flop circuits 132,134,136 connected in cascade. As these flip-flop circuits are clocked by I-clk, and flip-flops 132,134 serve to retime the strobe signal into the initiator clock domain. An AND gate 138 receives the output of the third flip-flop 136 at an inverting input and the output of the second flip-flop 134 at a non-inverting input, and generates an output whenever the output of flip-flop 136 is zero and that of flip-flop 134 is one. Thus the gate 138 detects a rising edge on the retimed strobe signal.

Whenever a rising edge is detected on the strobe signal two further flip-flops 140,142 also arranged in cascade are enabled, so that they can be clocked by I-clk. The flip-flops 140,142 pass the mode and latency values which they will normally receive having been set by the CPU 12. A comparator 144 is connected to compare the mode outputs of the flip-flops 140,142 and thus detects when the mode has changed. The comparator 144 generates a new-data signal accordingly.

The five flip-flops 132, 134, 136, 140 and 142 can all be reset by a reset signal, not shown.

In operation, therefore, the strobe signal is retimed by the initiator clock I-clk. The retiming is performed by flip-flops 132, 134 and 136. An active (high) enable pulse for flip-flop 140 is generated by the AND gate 138 with one investing input. The enable pulse has a width of one initiator clock cycle. New mode and latency values are loaded by the CPU into the flip-flop 140 on the rising edge of an initiator clock pulse only when the enabling pulse is high.

For the circuit of Figure 8 to operate effectively, the strobe signal received at input 130 should be high for at least one initiator clock cycle, the mode and latency values should be held constant for at least three initiator clock periods after the rising edge of the strobe, and the next strobe can have a rising edge no earlier than four initiator clocks after the previous strobe rising edge.

The preferred bridge circuit illustrated has two particular advantages. When the bridge circuit is used to go from a slow input clock to a relatively faster output clock, there will, in the absence of the bridge, be random gaps in the output. By using the FIFOs a hold-off can be achieved so as to bunch the output data more effectively.

The second advantage is that the bridge circuit described is configurable and re-configurable for use either with totally asynchronous clocks or with clocks obtained by counting down from a common clock source. The re-configuring can take place during operation on 'on the fly' under the control of the CPU. When the clocks are related some of the retiming stages can be eliminated.

Consequently the same bridge circuit can readily be adapted for different circumstances very easily under software control.

The bridge circuit can be valuable, for example, in systems which start up at a relatively low frequency, and then increase the clock speed to a full working frequency.

It will be appreciated that only one example of the invention has been explained in detail and that many changes and modifications may be made to the example described and shown in the drawings.

## Claims

1. A bridge circuit for use in retiming in a semiconductor integrated circuit, the bridge circuit comprising:
an initiator interface (64);
a target interface (66);
a storage buffer circuit (60) having a data input connected to the initiator interface (64) and a data output connected to the target interface (66), and having a plurality of storage locations (78); and
a storage buffer control circuit (68) associated with the storage buffer circuit (60); the storage buffer control circuit comprising:
a write pointer register (92) connected to the storage buffer circuit and clocked at the storage buffer input clock rate to control the storage location at which data is written into the storage buffer circuit ;
a read pointer register (94) connected to the storage buffer circuit and clocked at the storage buffer output clock rate to control the storage location from which data is read from the storage buffer circuit;
a first retiming circuit (108) coupled to the output of the read pointer register (94) to retime the output of the read pointer register with reference to the storage buffer input clock rate;
a second retiming circuit (110) coupled to the output of the write pointer register to retime the output of the write pointer register with reference to the storage buffer output clock rate;
a first comparator (104) connected to receive and compare the outputs of the write pointer register and the first retiming circuit and to provide an output dependent thereon;
a second comparator (106) connected to receive and compare the outputs of the read pointer register and the second retiming circuit and to provide an output dependent thereon;
write control logic (100) connected to receive the output of the first comparator and connected to the write pointer register to increment the count held in the write pointer register in dependence upon the output of the first comparator; and
read control logic (102) connected to receive the output of the second comparator and connected to the read pointer register to increment the count held in the read pointer register in dependence upon the output of the second comparator;
and wherein the write control logic (100) in the storage buffer control circuit (68) is adapted to control the write pointer register (92) such that data received at the data input of the associated storage buffer circuit (60) is written into successive storage locations (78) of the storage buffer circuit as the data is received so long as the storage locations are not all full, and the read control logic (102) in the storage buffer control circuit (68) is adapted to control the read pointer register (94) such that data in the storage locations is not read until a predetermined time delay and then all the said storage locations are read from successively and the contents applied to the data output of the storage buffer circuit (60).

2. A bridge circuit according to claim 1, wherein the predetermined time delay is a predetermined number of clock cycles of either buffer input or output clock.

3. A bridge circuit according to claim 1, wherein the predetermined time delay is when a predetermined number of storage locations are full.

4. A bridge circuit according to claim 1, 2 or 3 in which the read control logic also causes all the full storage locations to be read from on receipt of an end-of-packet signal.

5. A bridge circuit according to any preceding claim, in which the comparators (104,106) provide outputs indicating at least when the storage buffer circuit is full and is empty.

6. A bridge circuit according to any preceding claim, in which the maximum number of storage locations to be made available simultaneously is predetermined, the write control logic (100) is adapted to determine when the storage buffer circuit is full.

7. A bridge circuit according to any preceding claim, in which each retiming circuit (108,110) includes a Gray coder (124) clocked at the input clock rate of the retiming circuit.

8. A bridge circuit according to any of preceding claim 1, in which each retiming circuit (108,110) is adapted to provide a plurality of possible degrees of retiming, and including a mode signal input (114) for receiving a mode signal indicating the currently required degree of retiming, the retiming circuit being responsive to the mode signal to provide the required degree of retiming.

9. A bridge circuit according to claim 8, in which each retiming circuit (108,110) includes two retiming elements (120,122) connected in cascade, and a selector (126), the selector being connected to receive the input to the retiming elements and the output of each of the retiming elements and to select one of its inputs as the output in dependence upon the mode signal.

10. A bridge circuit according to claim 8 or 9, in which the mode signal is adapted to be changed during operation of the bridge circuit.

11. A bridge circuit according to claim 10, further comprising a strobe retiming circuit (132,134) connected to receive a strobe signal and retime it relative to the initiator clock, an edge detector (136,138) for detecting an edge in the strobe signal, a mode signal timing circuit (140) for timing the mode signal relative to the output of the edge detector, and a mode signal change detection circuit (142,144) connected to the output of the mode signal timing circuit to detect a change in the mode signal and to provide a change signal in response thereto.

12. A bridge circuit according to any of claims 1 to 11, further comprising a bypass (98) for the storage buffer circuit (60), and a selector (88) for selecting either the storage buffer circuit or the bypass in accordance with a mode signal received at an input (96).

13. A bridge circuit according to any of claims 1 to 12, further comprising a second storage buffer circuit (62) having a data input connected to the target interface (66) and a data output connected to the initiator interface (66) and a data output connected to the initiator interface (64) and having a plurality of storage locations (78), and a second storage buffer control circuit (70) similar to the first-mentioned storage buffer control circuit (68) connected to control the second storage buffer circuit (62).

14. A semiconductor integrated circuit comprising at least one bridge circuit in accordance with any of claims 1 to 13.

15. A bridge circuit for use in retiming in a semiconductor integrated circuit, the bridge circuit comprising:
an initiator interface (64);
a target interface (66);
a storage buffer circuit (60) having a data input connected to the initiator interface (64) and a data output connected to the target interface (66), and having a plurality of storage locations (78); and
a storage buffer control circuit (68) associated with the storage buffer circuit (60); the storage buffer control circuit comprising:
a write pointer register (92) connected to the storage buffer circuit and clocked at the storage buffer input clock rate to control the storage location at which data is written into the storage buffer circuit ;
a read pointer register (94) connected to the storage buffer circuit and clocked at the storage buffer output clock rate to control the storage location from which data is read from the storage buffer circuit;
a first retiming circuit (108) coupled to the output of the read pointer register (94) to retime the output of the read pointer register with reference to the storage buffer input clock rate comprising one or more retiming buffers and a selector connected to receive inputs from each of the retiming buffers ;
a second retiming circuit (110) coupled to the output of the write pointer register to retime the output of the write pointer register with reference to the storage buffer output clock rate comprising one or more retiming buffers and a selector connected to receive inputs from each of the retiming buffers ;
a first comparator (104) connected to receive and compare the outputs of the write pointer register and the first retiming circuit and to provide an output dependent thereon;
a second comparator (106) connected to receive and compare the outputs of the read pointer register and the second retiming circuit and to provide an output dependent thereon;
write control logic (100) connected to receive the output of the first comparator and connected to the write pointer register to increment the count held in the write pointer register in dependence upon the output of the first comparator; and
read control logic (102) connected to receive the output of the second comparator and connected to the read pointer register to increment the count held in the read pointer register in dependence upon the output of the second comparator;
and wherein the storage buffer control circuit (68) is adapted to control the selectors such that zero or more retiming buffers are selectively in the path from the read or write pointer registers to the comparators.

16. A bridge circuit according to claim 15, in which each retiming circuit (108,110) is adapted to provide a plurality of possible degrees of retiming, and including a mode signal input (114) for receiving a mode signal indicating the currently required degree of retiming, the retiming circuit being responsive to the mode signal to provide the required degree of retiming.

17. A bridge circuit according to claim 15 or 16, in which each retiming circuit (108,110) includes two retiming elements (120,122) connected in cascade, and a selector (126), the selector being connected to receive the input to the retiming elements and the output of each of the retiming elements and to select one of its inputs as the output in dependence upon the mode signal.

18. A bridge circuit according to any of claims 15 to 17, in which the mode signal is adapted to be changed during operation of the bridge circuit.

19. A bridge circuit according to any of claims 15 to 18, wherein each retiming buffer comprises a D-type flip-flop for each bit in the pointer register output, whereby zero or more D-type flip-flops are selectively chosen for retiming.

20. A bridge circuit according to any of claims 15 to 19, wherein selectively 0, 1 or 2 D-type flip-flops are selected for retiming.
